# EUROPÄISCHE PATENTSCHRIFT

(11) **EP 2 270 424 B1**
(45) Veröffentlichungstag und Bekanntmachung des Hinweises auf die Patenterteilung: **25.05.2011**
(21) Anmeldenummer: 09164455.9
(22) Anmeldetag: 02.07.2009
(51) Int. Cl.: G01B 11/25, F16P 3/14, G06T 7/00, G08B 13/18

(54) **Optoelektronischer Sensor und Verfahren zur Überwachung**
Opto-electronic sensor and monitoring method
Capteur optoélectronique et procédé de surveillance

(43) Veröffentlichungstag der Anmeldung: 05.01.2011
(73) Patentinhaber: SICK AG, 79183 Waldkirch (DE)
(72) Erfinder: Hammes, Dr. Markus, 79104, Freiburg (DE)
(74) Vertreter: Hehl, Ulrich

(56) Entgegenhaltungen:
- US-A1- 2002 018 118
- US-A1- 2003 067 537
- US-A1- 2008 273 758

## Beschreibung

Die Erfindung betrifft einen optoelektronischen Sensor und ein Verfahren zur Überwachung eines Raumbereichs nach dem Oberbegriff von Anspruch 1 beziehungsweise 11.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Ist die zu überwachende Szenerie kontrastschwach oder weist Bereiche mit wenig Struktur auf, so wird dadurch die Erkennung sicherheitskritischer Ereignisse erschwert oder sogar verhindert. In ganz besonderem Maße gilt dies für dreidimensionale Überwachungsverfahren, die auf Stereoskopie beruhen. Dabei werden Bilder der Szenerie mit einem Empfangssystem, das im Wesentlichen aus zwei zueinander beabstandeten Kameras besteht, aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden. Beispielsweise ist es möglich, Bewegungen des Roboters selbst oder Vorbeibewegungen eines Körperteils an der gefährlichen Maschine in einer unterschiedlichen Tiefenebene als ungefährlich zu erkennen. Das wäre mit einem zweidimensionalen System von einem unzulässigen Eingriff nicht unterscheidbar.

Gegenüber zweidimensionalen Systemen ergibt sich für jeden dreidimensionalen Sensor die zusätzliche Schwierigkeit, zuverlässige Abstandswerte über den ganzen Sichtbereich hinweg zu ermitteln. Besonders im Rahmen der Sicherheitstechnik besteht für eine zuverlässige Sicherheitsfunktion über das sichere Erkennen eines Eingriffs in den bereitgestellten Bilddaten hinaus der zusätzliche Anspruch, diese dreidimensionalen Bilddaten in Form einer dichten Tiefenkarte zu erzeugen, also einen zuverlässigen Abstandswert für jeden Bildbereich und bevorzugt nahezu jeden Bildpunkt verfügbar zu haben.

Bei passiven Stereosystemen, also solchen, die ohne eigene Beleuchtung arbeiten und damit bei der Bildgewinnung auf das Umgebungslicht und die vorhandenen Szenenkontraste angewiesen sind, ist diese Anforderung häufig nicht erfüllt. Große strukturlose Flächen oder zueinander ähnliche Strukturmerkmale verhindern eine eindeutige Zuordnung von Bildbereichen beim Auffinden der Korrespondenzen zwischen den Strukturelementen der Bilder. Dabei sind zumindest zwei Arten von Fehlern denkbar, nämlich ein Scheitern des Auffindens einander entsprechender Strukturelemente oder eine fehlerhafte Zuordnung. Die Folge sind Lücken in den dreidimensionalen Bildern oder fehlerhafte Berechnungen der Entfernungen. Beides ist für sicherheitstechnische Anwendungen höchst gefährlich, da ein unzulässiger Eingriff unerkannt bleiben oder eine falsche Entfernung zugeordnet werden könnte. Die Abschaltung der Gefährdungsquelle unterbleibt dann möglicherweise, weil der Eingriff fehlerhaft als unkritisch eingestuft wird. Es wird demnach auf Kosten der Applikationsvielfalt eine reduzierte Objektauflösung in Kauf genommen, und man muss sich darauf verlassen, dass zu detektierende Objekte wie Personen oder Roboter stets ausreichende Bildmerkmale zur Verfügung stellen.

Aktive Stereomesssysteme dagegen verwenden zusätzlich zu dem Empfangssystem eine Beleuchtungseinheit, deren Funktion ist, die beobachtete Szenerie mit strukturiertem Licht zu beleuchten und so durch die zahlreichen Hell-Dunkel-Übergänge in den Bildern Merkmale zu erzeugen, anhand derer der Stereoalgorithmus zuverlässige und flächendeckende Abstandsdaten aus der Szenerie extrahieren kann. Solche Muster können auch selbstunähnlich sein, also für die vorliegenden Überwachungen in erster Linie keine bezüglich Verschiebungen zueinander symmetrischen Bereiche aufweisen. Durch die der Szenerie aufgeprägten Bildmerkmale entstehen sehr viel dichtere und zuverlässigere Tiefeninformationen. Die aktive Strukturbeleuchtung muss jedoch stets mit dem vorherrschenden Umgebungslicht konkurrieren. Interferenzfilter, die auf die Frequenz der Beleuchtung abgestimmt sind, schaffen bis zu einem gewissen Grad Abhilfe, aber auch mit großem Aufwand sind solche Systeme nicht in der Lage, bei Anwesenheit von direktem Sonnenlicht zuverlässig zu arbeiten.

Eine passive Stereokamera zum Absichern eines Gefahrenbereichs offenbart die EP 1543270 A1, wobei eine Szenenanalyse anhand zweier algorithmisch unterschiedlicher Verfahren vorgenommen wird. Ein aktives Stereoskopiesystem ohne Bezug zur Sicherheitstechnik ist aus der US 2007/02 63 903 A1 bekannt. Dabei entsteht das Beleuchtungsmuster, indem ein diffraktives optisches Element mit einem Laser beleuchtet wird.

In der DE 10 2006 001 634 B3 ist ein Verfahren zur stereoskopischen Erstellung eines Abstandsbildes beschrieben, bei dem die Szenerie zweimal aufgenommen wird, nämlich einmal unter Aufprägen eines Zufallsmusters und ein zweites Mal unter einer veränderten Beleuchtung. Der Stereoalgorithmus basiert dann auf Bildern, in denen die Pixel nicht die Absolutwerte, sondern Helligkeitsquotienten der beiden Aufnahmen enthalten. Aus der DE 10 2007 036 129 B3 ist bekannt, jedem ausgewerteten Entfernungsbild zwei dreidimensionale Bilder zugrunde zu legen, die unter zwei unterschiedlichen Aufnahmebedingungen entstanden sind, beispielsweise unter Beleuchtung mit einem selbstunähnlichen oder regelmäßigen Muster und bei abgeschalteter Beleuchtung. Das Vorgehen erfordert jeweils zwei aufeinanderfolgende Aufnahmen unter Veränderung der Beleuchtungsbedingungen.

Die DE 102 24 031 B3 offenbart ein zweidimensionales Kamerasystem zur Überwachung eines Erfassungsbereichs. Dabei wird das einfallende Licht mittels eines Strahlteilers zugleich zwei identischen oder funktionsgleichen Kameras zugeführt und das Auswertungsergebnis der beiden Kameras verglichen. Das System ist damit zwar redundant und bietet eine gewisse Sicherheit gegenüber Fehlern in den Kameras. Das Vorgehen erzeugt und erfordert aber identische Bilddaten. Würde man dies auf ein dreidimensionales System übertragen, so ändert sich nichts an den oben beschriebenen Nachteilen, denn eine falsche Entfernungsbestimmung in der einen Kamera würde zwingend und bestimmungsgemäß auch in der identischen zweiten Kamera erfolgen.

Aus der DE 20 2007 014 917 U1 ist bekannt, die Funktionsfähigkeit des ortsauflösenden Lichtempfängers eines zur dreidimensionalen Bilderzeugung ausgebildeten Sensors durch Blenden mit einem Testlichtsender zu prüfen. Dabei ist ein optisches Element vorgesehen, welches das Testlicht aufgrund seiner Wellenlänge sensorintern auf den Lichtempfänger reflektiert und zugleich einfallendes Licht mit anderen Wellenlängen als das Testlicht aus dem Übervvachungsbereich transmittiert.

In herkömmlichen 3CCD-Kameras werden trichoritische Prismenstrahlteiler verwendet, um die drei Grundfarbanteile Rot, Grün und Blau auf drei getrennte CCD-Chips hinter einem einzigen Objektiv zu verteilen und so ein Farbbild zu generieren. Gegenüber dem bekannten Bayer-Pattern, bei dem auf einem gemeinsamen Chip Lichtempfangselemente für die Grundfarben einander ähnlich einem Schachbrett abwechselnd untergebracht sind, treten in 3CCD-Kameras keine Auflösungsverluste auf. Für die Objektdetektion in dreidimensionalen Überwachungskameras werden aber ohnehin meist Grauwertbilder und keine Farbbilder eingesetzt. Die alternativ denkbare Verwendung von Farbbildern würde über die diskutierten Schwierigkeiten auch nur in Ausnahmefällen hinweghelfen, da beispielsweise eine strukturlose Fläche durch farbige Aufnahme nicht an Struktur gewinnt.

Die US2008/0273758 A1 offenbart eine Vorrichtung zur Überwachung und Absicherung eines Gefahrenbereichs mit Hilfe zweier Lichtlaufzeitkameras. Derartige Kameras haben nur einen begrenzten Eindeutigkeitsbereich, der bei einem Phasenverfahren prinzipbedingt ist und bei einem Pulsverfahren von einer hohen Pulsfrequenz herrührt, und können daher fehlerhafte Entfernungswerte erzeugen. Die Lösung der US2008/0273758 A1 besteht darin, dass die Entfernungswerte der zweiten Lichtlaufzeitkamera dazu verwendet werden, die Plausibilität der Entfernungswerte der ersten Lichtlaufzeitkamera zu überprüfen. In einer Ausführungsform sind zwei Lichtquellen unterschiedlicher Wellenlängen vorgesehen, und das Empfangslicht wird beiden Lichtlaufzeitkameras über einen Strahlteiler zugeführt. Jeder der beiden Lichtlaufzeitkameras ist ein Farbfilter zugeordnet, der auf eine der beiden Lichtquellen abgestimmt ist, so dass die eine Lichtlaufzeitkamera das Licht der einen Lichtquelle und die andere Lichtlaufzeitkamera das Licht der anderen Lichtquelle aufnimmt.

Aus der US 2003/0067537 A1 ist ein System für dreidimensionale Datenerzeugung bekannt, das auf einem Lichtschnittverfahren beruht. Ein Objekt wird mit einer gewöhnlichen Lichtquelle beleuchtet, um ein Bild für eine Visualisierung zu erhalten, und zugleich werden ein oder mehrere regelmäßige Muster projiziert, um aus dessen Verzerrungen durch Objektkonturen ein dreidimensionales Profil zu gewinnen. Aus der somit von mehreren überlagerten Lichtquellen beleuchteten Szenerie werden mit einem aus zwei Strahlteilern aufgebauten Filter Einzelbilder der jeweiligen Muster sowie ein Bild ohne dieses Muster separiert. Die Muster können aus verschiedenen Winkeln einprojiziert werden, um ohne Verwendung mehrerer Kameras eine stereoskopische Auswertung zu ermöglichen.

In der US 200210018118 A1 werden simultan mehrere phasenverschobene Muster für ein Interferenzverfahren zur Gewinnung dreidimensionaler Bilddaten projiziert. Jedes Muster wird in einem eigenen Wellenlängenbereich erzeugt. Eine Reihenanordnung von frequenzselektiven Strahlteilern führt jeweils einen Wellenlängenbereich einem eigenen Bildsensor zu, um somit simultan je ein Bild jedes Musters aufzunehmen.

Es ist daher Aufgabe der Erfindung, eine Möglichkeit zu schaffen, verbesserte dreidimensionale Bilddaten zu erzeugen.

Diese Aufgabe wird durch einen optoelektronischen Sensor gemäß Anspruch 1 und ein Verfahren zur Überwachung eines Raumbereichs gemäß Anspruch 11 gelöst.

Dabei geht die Erfindung von dem Grundgedanken aus, das Licht aus dem Erfassungsbereich mehrfach auszuwerten. Dazu werden unterschiedliche Lichtanteile separiert und auf verschiedenen Lichtpfaden von je einem Bildsensor aufgenommen, so dass zugleich zwei Bilder entstehen, die sich aufgrund der physikalischen Eigenschaft unterscheiden. Aus den somit zueinander unterschiedlichen Bilddaten werden zunächst einzeln Entfernungen berechnet, bevor die Entfernungsdaten dann in der Tiefenkarte zusammengeführt werden.

Die Lösung hat den Vorteil, dass aus unterschiedlichen Auswertungen einander kompensierende und ergänzende Entfernungsinformationen gewonnen werden. Die dafür aufgenommenen Bilder entstehen zeitgleich. Damit werden deutlich verbesserte Tiefenkarten erzeugt, die eine wesentlich zuverlässigere Überwachung ermöglichen. Ein wichtiges Beispiel für eine physikalische Eigenschaft zur Trennung der Lichtanteile ist das Frequenzband einer aktiven Beleuchtung, so dass bei Verwendung eines stereoskopischen Sensors eine Kombination aus aktiver und passiver Stereoskopie entsteht, welche die Vorteile beider Vorgehensweisen nutzt.

Das Zusammenführen der Entfernungsinformationen schließt auch ein Vorgehen ein, in dem die Entfernungsinformationen zunächst einzeln auf Objekte untersucht und anschließend die Ergebnisse verglichen oder ergänzt werden. Dabei wird zwar möglicherweise an keiner Stelle eine vollständige kombinierte Tiefenkarte erzeugt, das Vorgehen wäre aber vom Ergebnis her dasselbe und entspricht zumindest einer impliziten Verwendung von lokalen gemeinsamen Tiefenkarten. Da die Objektdetektion in der Regel aufwändig ist, besteht aber das bevorzugte Vorgehen darin, vorab Lücken in den ersten Entfernungsinformationen durch die zweiten Entfernungsinformationen aufzufüllen und umgekehrt, somit die entstehende gemeinsame Tiefenkarte nur einmal auf Objekte auszuwerten.

Sofern an einem Entfernungspixel der Tiefenkarte sowohl ein Wert der ersten Entfernungsinformationen als auch der zweiten Entfernungsinformationen vorliegt, können die Entfernungen miteinander verrechnet werden, beispielsweise als einfaches oder gewichtetes Mittel mit Zuverlässigkeitswerten der Entfernungsinformationen. Stereoskopische Algorithmen beispielsweise liefern häufig zu jeder Entfernung Korrelationsmaße, erkennen also selbst, wie zuverlässig die jeweilige Entfernungsmessung ist. Dabei kann auch die Nachbarschaft des jeweils betrachteten Entfernungspixels eine Rolle spielen, etwa ob dort ähnliche Entfernungen gemessen wurden und daher von einem gemeinsamen Objekt ausgegangen werden kann. Stark in ihrer Entfernung variierende Entfernungswerte benachbarter Entfernungspixel sind häufig Artefakte.

Die in der Lösung genannten ersten und zweiten Bildsensoren dürfen nicht mit den üblichen beiden Bildsensoren eines Stereoskopiesystems verwechselt werden. Die genannten Bildsensoren nehmen im Gegenteil zumindest mit weitgehender Überlappung denselben Bildbereich aus derselben Perspektive auf, so dass es schon an einem Triangulationswinkel fehlt.

Für ein Stereoskopiesystem ist ein zusätzlicher zweiter, mit dem ersten gewöhnlich identischer Stereoskopiezweig erforderlich. Weiterbildungen des einen Zweigs der in den Unteransprüchen und Ausführungsbeispielen beschriebenen Systeme sind jeweils für beide Stereoskopiezweige einsetzbar. Ist beispielsweise ein gemeinsames Objektiv beansprucht, so sind in der stereoskopischen Ausführung zwei gemeinsame Objektive jeweils für jeden Stereoskopiezweig vorgesehen. Ausführungen betreffend den ersten Lichtpfad mit dem ersten Bildsensor oder den zweiten Lichtpfad mit dem zweiten Bildsensor gelten analog für den dritten Lichtpfad mit dem dritten Bildsensor beziehungsweise den vierten Lichtpfad mit dem vierten Bildsensor. Entsprechend sind Eigenschaften des ersten Strahlteilerelements auf das zweite Strahlteilerelement übertragbar.

Damit kann passive und aktive Stereoskopie kombiniert werden, etwa indem eine Beleuchtung im nahen Infrarotbereich gewählt und diese von den Strahlteilerelementen selektiv beispielsweise in den ersten beziehungsweise dritten Lichtpfad gelenkt wird. Mit dem Paar aus erstem und dritten Bildsensor wird dann ein aktives, mit dem Paar aus zweitem und viertem Bildsensor ein passives Stereoskopiesystem realisiert. Der eigentliche Stereoskopiealgorithmus kann dabei derselbe sein, aber auch jeweils für besondere Anforderungen aktiver oder passiver Stereoskopie angepasst werden.

Die physikalische Eigenschaft umfasst bevorzugt eine Frequenz des Lichts, und mittels des ersten Strahlteilerelements ist Licht eines ersten Frequenzbandes in den ersten Lichtpfad und Licht eines zweiten Frequenzbandes in den zweiten Lichtpfad ablenkbar oder Licht eines ersten Frequenzbandes, insbesondere eines infraroten Frequenzbandes, in den ersten Lichtpfad und Licht außerhalb des ersten Frequenzbandes, insbesondere Umgebungslicht, in den zweiten Lichtpfad ablenkbar oder umgekehrt. Damit können beispielsweise Bilder mit zwei gleichzeitig eingestrahlten Beleuchtungsmustern in dem ersten beziehungsweise dem zweiten Frequenzband getrennt und einzeln ausgewertet werden, oder es wird ein Beleuchtungsmuster in dem ersten Frequenzband, etwa einer schmalbandigen nahinfraroten Beleuchtung, in dem einen Lichtpfad und das gesamte Umgebungslicht außerhalb dieses Frequenzbandes in dem anderen Lichtpfad ausgewertet.

Vorteilhafterweise ist eine Beleuchtungseinheit vorgesehen, welche dafür ausgebildet ist, den Raumbereich mit Licht eines ersten Frequenzbereichs auszuleuchten, insbesondere mit einem strukturierten Beleuchtungsmuster. Alternativ oder zusätzlich kann auch das Umgebungslicht durch eine homogene, auch bandige Beleuchtung verstärkt werden. Die Beleuchtung verbessert das Empfangssignal, und besonders eine Musterbeleuchtung prägt der Szene Struktur auf, um Entfernungsschätzungen zu ermöglichen.

Besonders bevorzugt ist die Beleuchtungseinheit dafür ausgebildet, nur selektiv Teilbereiche des Raumbereichs auszuleuchten, insbesondere Randbereiche von Schutzbereichen, und/oder die 3D-Auswertungseinheit nimmt umgekehrt die Erzeugung der ersten Entfernungsinformationen innerhalb der Teilbereiche und die Erzeugung der zweiten Entfernungsinformationen in dem Raumbereich außerhalb der Teilbereiche mit geringerer Genauigkeit vor. Durch Konzentration der aktiven Beleuchtung wird die Energie gebündelt, und der Sensor gewinnt an Reichweite, oder es genügt eine kostengünstigere weniger lichtstarke Beleuchtung. Fokussierung der Auswertung auf kritische Bereiche spart Rechenaufwand und damit Rechnerhardware. Die geringere Genauigkeit der Auflösung kann so weit gehen, dass gar keine Auswertung vorgenommen wird. Beispielsweise beschränkt sich die aktive Stereoskopie dann nur auf die ausgeleuchteten Teilbereiche. In den übrigen Bereichen, etwa in einem von Schutzfeldern umgebenen Innenbereich, genügt eine reduzierte Auflösung, wie sie beispielsweise ein passives Stereosystem liefert.

Die physikalische Eigenschaft umfasst bevorzugt eine Polarisationsrichtung oder eine Intensität des Lichts, wobei insbesondere das erste Strahlteilerelement dafür ausgebildet ist, in den ersten Lichtpfad Licht einer um einen Faktor 5, 10, 100 oder 1000 geringeren Intensität abzulenken als in den zweiten Lichtpfad oder umgekehrt. Über die Polarisation können beispielsweise verschiedene Beleuchtungslaserquellen getrennt werden, aber auch glänzende Flächen identifiziert werden. Ein Strahlteilerelement kann auch zur Erhöhung der Signaldynamik verwendet werden. Analog einem HDR-System (High Dynamic Range), aber in Hardware umgesetzt, werden damit verschiedene Dynamikbereiche für die Bildsensoren in den Lichtpfaden gewählt, um unterschiedliche Signalstärken besser aufzulösen oder insgesamt die auflösbare Dynamik zu vergrößern.

Dem Strahlteiler ist vorteilhafterweise ein gemeinsames Objektiv für den ersten Bildsensor und den zweiten Bildsensor vorgeordnet. Zum einen wird damit gegenüber einem redundanten System mit mehreren Kameras ein Objektiv eingespart, zum anderen treffen jegliche Ungenauigkeiten und Abbildungsfehler beide Bildsensoren gleichermaßen und erzeugen so keine Artefakte bei der Korrespondenzsuche eines Stereosystems.

Erster Bildsensor und zweiter Bildsensor sind bevorzugt dafür ausgebildet sind, Bilder des Raumbereichs um einen Bruchteil einer Pixelbreite, insbesondere eine halbe Pixelbreite, versetzt zueinander aufzunehmen. Erreichbar ist dies durch entsprechende Justierung beziehungsweise Anordnung der Bildsensoren gegenüber dem ersten Strahlteilerelement und damit dem einfallenden Empfangslicht. So entsteht ein Interlacing-Effekt, der die Auflösung erhöht.

Das erste Strahlteilerelement ist bevorzugt als beschichtetes Prisma oder als beschichteter Spiegel ausgebildet. Damit lässt sich die gewünschte Selektivität in Bezug auf die physikalische Eigenschaft vorgeben. Ist die physikalische Eigenschaft die Frequenz, so wird beispielsweise ein dichroitisches Prisma gewählt. In einer Weiterbildung ist der Strahlteiler trichroitisch oder noch komplexer ausgebildet und es entstehen analog zu den ersten beiden Lichtpfaden weitere Lichtpfade mit jeweils einem Bildsensor, dessen Bilddaten getrennt ausgewertet werden können.

Der Sensor ist bevorzugt als Sicherheitskamera ausgebildet, wobei eine Objektauswertungseinheit für die Erkennung und Überwachung von Objekten innerhalb des Raumbereichs ausgebildet ist, und wobei ein Abschaltsignal ausgebbar ist, wenn ein unzulässiger Objekteingriff in einen Schutzbereich innerhalb des Raumbereichs erfolgt. Dieser typischen sicherheitstechnischen Anwendung kommt die verbesserte Tiefenkarte besonders zugute. Unzulässige Objekteingriffe können jegliche Eingriffe in einen Schutzbereich, aber auch solche Eingriffe sein, die nicht als zulässig eingelernt oder erkannt werden, beispielsweise eine feststehende Werkbank, die regelmäßige Arbeitsbewegung eines Roboters oder eine durchfahrende Palette.

Die 3D-Auswertungseinheit ist bevorzugt dafür ausgebildet, aus den Bilddaten des ersten Bildsensors und des zweiten Bildsensors Informationen über die Umgebungsbedingungen zu gewinnen, insbesondere Fremdlichtpegel oder ortsauflösende Glanz- oder Remissionseigenschaften in dem Raumbereich oder im Hintergrund, und diese Umgebungsbedingungen zu verwenden, um die Genauigkeit der ersten Entfernungsinformationen und der zweiten Entfernungsinformationen zu verbessern oder zu bewerten. Liefert die Bestimmung der Entfernungsinformationen zugleich ein Verlässlichkeitsmaß, so lässt sich dieses Maß durch derartige Umgebungsbedingungen verbessern oder ergänzen. In manchen Situationen ist mit dem Wissen um derartige Umgebungsbedingungen auch eine Verbesserung der Entfernungsschätzung selbst möglich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Sensoranord- nung mit zwei Lichtpfaden;
- Fig. 2: eine Darstellung gemäß Figur 1 für eine erfindungsgemäße Ausführungs- form als Stereokamera und
- Fig. 3: eine schematische räumliche Gesamtdarstellung der Anordnung einer er- findungsgemäßen Stereokamera an einem zu überwachenden Raumbe- reich.

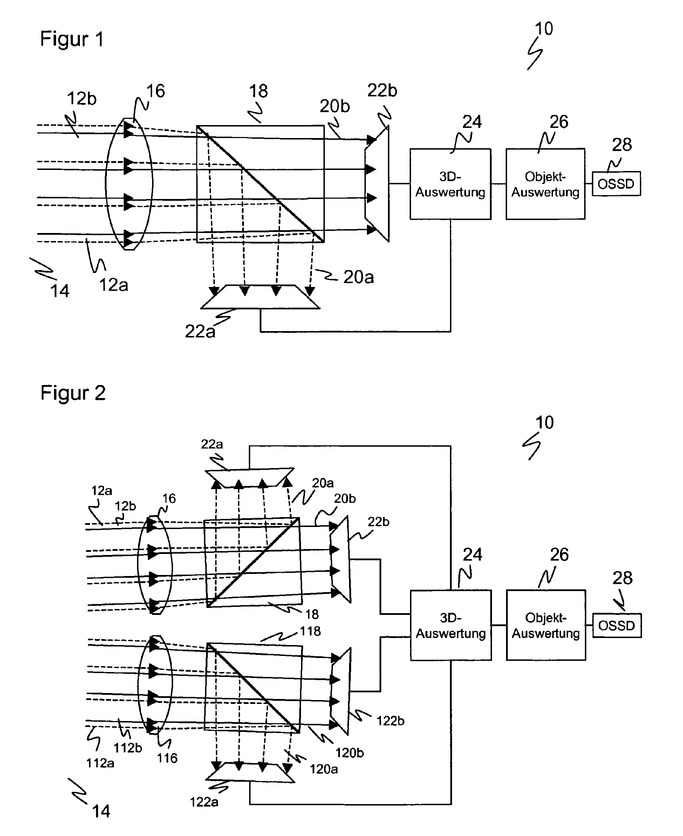

Figur 1 zeigt schematisch das Innere eines beispielhaften optoelektronischen 3D-Sensors 10, beispielsweise einer 3D-Kamera, die Licht 12a-b aus einem Raumbereich 14 empfängt. Das Licht 12a-b ist eine Überlagerung aus einem mittels gestrichelten Pfeilen dargestellten ersten Lichtanteil 12a und einem mittels durchgezogenen Pfeilen dargestellten zweiten Lichtanteil 12b.

Nach Strahlformung in einem vereinfacht als Sammellinse 16 dargestellten Objektiv der Kamera 10 fällt das Licht 12a-b auf ein beschichtetes Strahlteilerprisma 18, welches einfallendes Licht selektiv ablenkt. Dabei können verschiedene physikalische Eigenschaften wie Frequenz, Polarisation oder Intensität die Aufteilung bestimmen. Das Strahlteilerprisma 18 lenkt dann unter Vorgabe der physikalischen Eigenschaft den ersten Lichtanteil 12a in einen ersten Lichtpfad 20a und den zweiten Lichtanteil in einen zweiten Lichtpfad 20b, wo aus dem Licht 12a-b ein erster Bildsensor 22a beziehungsweise ein zweiter Bildsensor 22b Bilddaten erzeugt. Anstelle eines Prismas kann auch ein Spiegel oder ein anderes optisches Element als Strahlteiler 18 eingesetzt werden. Die Bildsensoren 22a-b sind üblicherweise matrixförmige Aufnahmechips, die ein rechteckiges Pixelbild aufnehmen, beispielsweise CCD- oder CMOS-Sensoren.

Der erste Lichtanteil 12a kann beispielsweise Musterlicht einer in Figur 1 nicht dargestellten Beleuchtungseinheit sein, das dem Raumbereich 14 eine Beleuchtungsstruktur in einem definierten, engen Frequenzband im sichtbaren, ultravioletten oder infraroten Spektrum aufprägt. Den ersten Bildsensor 22a erreicht dann nur das Musterlicht 12a, und das Umgebungslicht 12b außerhalb des engen Frequenzbands empfängt der zweite Bildsensor 22b. Alternativ können auch zweifarbige Beleuchtungen überlagert werden, wobei die eine Farbe in den ersten Lichtpfad 20a und die zweite Farbe in den zweiten Lichtpfad 20b gelenkt wird. Auch verschieden polarisierte Lichtquellen, etwa unterschiedliche Laserlichtquellen, können von dem Strahlteiler 18 in die unterschiedlichen Lichtpfade 20a-b aufgetrennt werden.

Denkbar ist weiterhin ein Intensitätsunterschied, bei dem der Strahlteiler 18 einen höheren Lichtanteil in den einen Lichtpfad 20a-b lenkt als in den anderen Lichtpfad 20b-a. Dabei wird zur Verbesserung der Dynamik Licht stark asymmetrisch beispielsweise im Verhältnis 1:10, 1:100 oder in einer anderen Größenordnung verteilt. Bei Unterbelichtung oder Übersteuerung des einen Lichtpfads 20a-b liefert dann zumindest der andere Lichtpfad 20b-a noch Bilddaten, so dass die Bildsensoren 22a-b einzeln nicht die volle zu erwartende Helligkeitsdynamik abdecken müssen.

Eine 3D-Auswertungseinheit 24 empfängt die Bilddaten der beiden Bildsensoren 22a-b und erzeugt daraus eine Tiefenkarte. Dazu werden Entfernungsinformationen einmal aus den Bilddaten des ersten Bildssensors 22a und einmal aus den Bilddaten 22b des zweiten Bildsensors ermittelt und dann zu der Tiefenkarte kombiniert.

Eine Objektauswertungseinheit 26 prüft die dreidimensionalen Bilddaten der Tiefenkarte darauf, ob sich in dem Raumbereich 14 bekannte oder unerwartete Objekte befinden. Dabei kann es sich beispielsweise um einen Roboterarm, eine Maschine, eine Bedienperson und anderes handeln. Der Raumbereich 14 bietet in einer wichtigen Anwendung Zugang zu einer Gefahrenquelle, sei es weil es ein Zugangsbereich ist oder weil sich eine gefährliche Maschine in dem Raumbereich 14 selbst befindet. Um diese Gefahrenquelle abzusichern, können ein oder mehrere virtuelle Schutz- und Warnfelder konfiguriert werden. Aufgrund der dreidimensionalen Auswertung ist es möglich, diese Felder ebenfalls dreidimensional zu definieren, so dass eine große Flexibilität entsteht.

Die Objektauswertungseinheit 26 wertet aus, ob eines der erkannten Objekte unzulässig in ein Schutzfeld eingreift. Die Auswertungsregeln können beispielsweise vorschreiben, dass in Schutzfeldern überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Bei unzulässigem Eingriff gibt die Objektauswertungseinheit 26 eine Warnung aus oder sichert die Gefahrenquelle ab, indem ein Abschaltsignal über einen Sicherheitsausgang 28 (OSSD, Output Signal Switching Device) ausgegeben wird. Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist der Sensor 10 fehlersicher ausgelegt. Dies bedeutet unter anderem, dass der Sensor 10 sich selber in Zyklen unterhalb der geforderten Ansprechzeit testen kann und dass der Sicherheitsausgang 28 sicher, beispielsweise zweikanalig ausgelegt ist. Ebenso ist auch die 3D-Auswertung 24 sowie die Objektauswertung 26 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert. Eine entsprechende Norm für Sicherheitskameras befindet sich in der Vorbereitung.

Es gibt verschiedene Verfahren zur Entfernungsbestimmung und damit der Erzeugung dreidimensionaler Bilddaten. Lichtschnittverfahren projizieren bekannte Muster in den Raumbereich 14 und schließen aus deren Verzerrung auf Objektstrukturen und Entfernungen. Zwei verschiedene Muster in je einer eigenen Farbe oder mit je einer eigenen Polarisation können von nicht dargestellten Lichtquellen ausgesandt und in je einem Lichtpfad 20a-b getrennt ausgewertet werden.

Lichtlaufzeitkameras bestimmen Entfernungen aus der Laufzeit ausgesandter Lichtpulse oder aus der Phasenverschiebung von amplitudenmoduliertem Sendelicht. Ähnlich wie bei den Lichtschnittverfahren können auch hier Sendelichtquellen unterschiedlichen Spektrums oder unterschiedlicher Polarisation und damit effektiv zwei Messungen zeitgleich durchgeführt werden.

Ein wichtiges 3D-Bildgebungsverfahren ist die Stereoskopie. Eine erfindungsgemäße Ausführungsform des Sensors 10 als Stereoskopiekamera ist in Figur 2 dargestellt. Dabei bezeichnen hier und im Folgenden gleiche oder Bezugszeichen mit vorangestellter Ziffer Eins die gleichen oder analoge Merkmale. Die zu Figur 1 beschriebene Varianten sind auch in dieser Ausführungsform einsetzbar.

Die Ausführungsform gemäß Figur 1 bildet quasi einen Stereoskopiezweig, die um einen identisch aufgebauten zweiten Stereoskopiezweig ergänzt wird. Je eine Optik 16, 116 bildet somit das einfallende Licht ab, das von Strahlteilerprismen 18, 118 in je einen Lichtpfad 22a-b, 122a-b mit eigenem Bildsensor 22a-b, 122a-b gelenkt wird. Die 3D-Auswertungseinheit 24 ist hier als Stereoskopieauswertungseinheit ausgebildet und legt jeweils die Bildpaare der korrespondierenden Lichtpfade 12a, 112a; 12b, 112b zwei getrennten stereoskopischen Auswertungen zugrunde. Jedes Bildpaar beruht damit auf einfallendem Licht der gleichen physikalischen Eigenschaften.

In einer besonderen Ausführungsform ist der erste Lichtanteil 12a, 112a, welcher der einen stereoskopischen Auswertung zugrunde liegt, Musterlicht im schmalen, insbesondere nahinfraroten Frequenzband einer zusätzlichen Beleuchtungseinheit, und der zweite Lichtanteil 12b, 122b der anderen stereoskopischen Auswertung das Umgebungslicht im übrigen Spektrum. Es wird also aktive mit passiver Stereoskopie kombiniert.

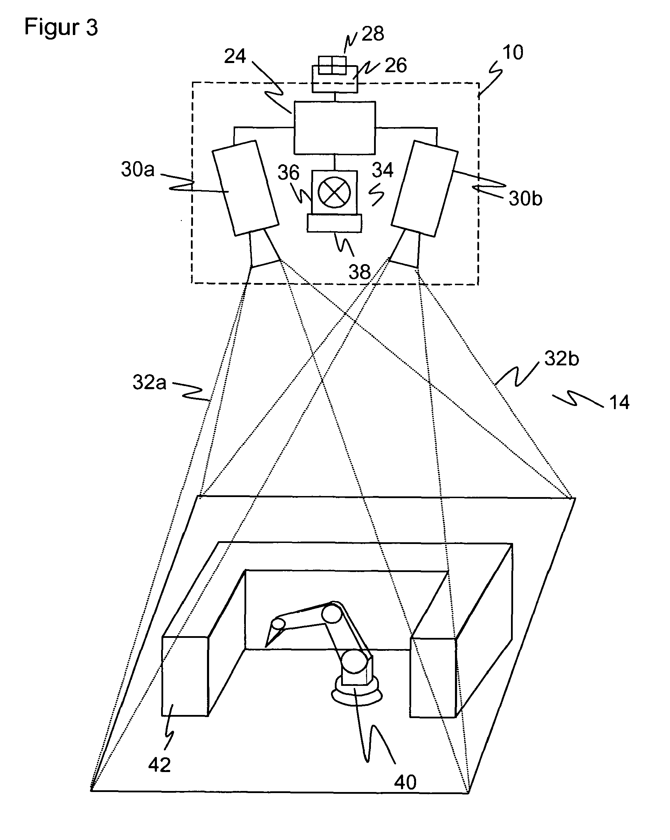

Figur 3 zeigt in einer dreidimensionalen schematischen Ansicht die Anordnung einer erfindungsgemäßen Stereokamera zur sicherheitstechnischen Überwachung eines Raumbereichs 14. Ganz analog ließe sich auch ein anderer 3D-Sensor 10 gemäß Figur 1 anordnen. Die beiden Stereoskopiezweige sind sehr vereinfacht als Kameras 30a-b und deren Sichtwinkel mittels gestrichelter Linien dargestellt, die jeweils eine Sichtpyramide 32a-b bilden.

In der Mitte zwischen den beiden Kameras 30a-b ist eine Beleuchtungseinheit 34 dargestellt, wobei diese räumliche Anordnung nur als Beispiel zu verstehen ist und die Beleuchtungseinheit ebenso asymmetrisch oder sogar außerhalb der Stereokamera 10 angeordnet sein kann. Die Beleuchtungseinheit 34 erzeugt in dem Raumbereich 14 ein strukturiertes Beleuchtungsmuster. Dafür durchstrahlt beispielsweise eine Laserlichtquelle oder eine LED 36 ein als diffraktives optisches Element, Maske oder Phasenplatte ausgebildetes mustererzeugendes Element 38.

In dem Raumbereich befindet sich als Beispielobjekt ein Roboterarm 40. Ein Schutzfeld 42 zieht sich als dreidimensionaler virtueller Zaun um den Roboterarm 40, welcher für Bedienpersonal eine potentielle Gefahrenquelle darstellt. Erkennt die Objektauswertungseinheit 26 einen unzulässigen Eingriff in das Schutzfeld 42, so wird der Roboterarm 40 abgeschaltet oder in eine sichere Parkposition verbracht.

Erfindungsgemäß wird demnach in dieser Ausführungsform der Empfangsstrahlengang in einer Stereokamera modifiziert. Bei einem aktiven System wird das Umgebungslicht üblicherweise von einem Interferenzfilter absorbiert, beispielsweise durch die Frontscheibe eines nicht dargestellten Gehäuses. Die Erfindung sieht stattdessen vor, das Umgebungslicht mit dem Strahlteiler umzulenken und ebenfalls auszuwerten. Dadurch kann ohne zusätzliche Empfangsobjektive und mit identischem elektronischen Auswertesystem die komplette komplementäre Bildinformation nutzbar gemacht werden. Die Auswerteverfahren sind möglicherweise zu adaptieren, um aktive und passive Stereoskopie optimal zu unterstützen.

Die Kombination der zueinander komplementären Ansätze aktiver und passiver Stereoskopie bietet eine Reihe von Vorteilen, welche zu besseren und dichteren Tiefenkarten führen. Passive Systeme haben den erheblichen Nachteil, ohne natürliche Struktur keine Entfernungsinformationen zu liefern. Sie sind aber aktiven Systemen nicht in jeder Hinsicht unterlegen.

Während aktive Systeme durch starkes Umgebungslicht beeinträchtigt werden, können passive Systeme bei zu schwachem Umgebungslicht keine Tiefendaten gewinnen. Die Kombination bietet also in allen Extremen der Umgebungslichtverhältnisse zumindest die Tiefendaten eines Systemteils.

Die aktive Beleuchtung verteilt sich mit zunehmendem Abstand auf immer größere Flächen und begrenzt so die energetische Reichweite. Die Reichweite eines passiven Systems ist nur durch die Pixelauflösung begrenzt. Während also das aktive System meist dichtere Tiefeninformationen liefert, ergänzt das passive System, soweit natürliche Struktur vorhanden ist, Entfernungsdaten auch aus Bereichen jenseits der Reichweite der aktiven Beleuchtung.

Aktive Systeme besitzen, wie erwähnt, aus Gründen der Fremdlichtfestigkeit einen Interferenzfilter für Umgebungslicht. Von glänzenden Oberflächen gewinnen sie daher keine Entfernungsinformationen, da das eigene Beleuchtungsmuster weggespiegelt wird, während zugleich der Interferenzfilter an sich erkennbare Spiegelungen von Umgebungsmerkmalen unterdrückt. Diese Umgebungsmerkmale erkennt aber kompensierend der passive Systemteil.

Sicherheitstechnisch ist eine Redundanz, besonders eine diversitäre Redundanz häufig gewünscht oder sogar erforderlich. Die Robustheit und Verfügbarkeit des Systems ist durch die Kombination erhöht, Detektionslöcher und Messartefakte werden unterdrückt.

Schließlich entspricht ein mit einem passiven System aufgenommenes Bild wesentlich eher dem natürlichen Seheindruck und eignet sich deshalb besser für die Visualisierung zur Diagnose oder Konfiguration. Alle diese Vorteile der Kombination werden erfindungsgemäß mit sehr geringem Zusatzaufwand erreicht.

## Patentansprüche

1. Optoelektronischer Sensor (10) zur Überwachung eines Raumbereichs (14), wobei der Sensor (10) einen ersten Lichtpfad (20a), in dem ein erster Bildsensor (22a) vorgesehen ist, und einen zweiten Lichtpfad (20b), in dem ein zweiter Bildsensor (22b) vorgesehen ist, sowie ein erstes Strahlteilerelement (18) aufweist, mittels dessen einfallendes Licht (12a-b) selektiv unter Vorgabe einer physikalischen Eigenschaft des Lichts (12a-b) in den ersten Lichtpfad (20a) oder den zweiten Lichtpfad (20b) ablenkbar ist,
wobei eine 3D-Auswertungseinheit (24) vorgesehen ist, welche für die Erzeugung von ersten Entfernungsinformationen mit Hilfe von dem ersten Bildsensor (22a) aufgenommener Bilddaten des Raumbereichs (14) und von zweiten Entfernungsinformationen mit Hilfe von dem zweiten Bildsensor (22b) aufgenommener Bilddaten des Raumbereichs (14) sowie zur Zusammenführung der ersten Entfernungsinformationen und der zweiten Entfernungsinformationen zu einer dreidimensionalen Tiefenkarte des Raumbereichs (14) ausgebildet ist,
**dadurch gekennzeichnet,**
**dass** der Sensor als stereoskopische Kamera ausgebildet (10) ist, wobei erstes Strahlteilerelement (18), erster Bildsensor (22a) und zweiter Bildsensor (22b) einen ersten Stereoskopiezweig bilden und die Kamera (10) einen zweiten Stereoskopiezweig mit einem dritten Lichtpfad (120a), in dem ein dritter Bildsensor (122a) vorgesehen ist, mit einem vierten Lichtpfad (120b), in dem ein vierter Bildsensor (122b) vorgesehen ist, sowie mit einem zweiten Strahlteilerelement (188) aufweist, mittels dessen einfallendes Licht (112a-b) selektiv unter Vorgabe einer physikalischen Eigenschaft des Lichts (112a-b) in den dritten Lichtpfad (120a) oder den vierten Lichtpfad (120b) ablenkbar ist, und dass die 3D-Auswertungseinheit (24) dafür ausgebildet ist, die ersten Entfernungsinformationen mit Hilfe von dem ersten Bildsensor (22a) und dem dritten Bildsensor (122a) aufgenommener Bilddaten des Raumbereichs (14) und die zweiten Entfernungsinformationen mit Hilfe von dem zweiten Bildsensor (22b) und dem vierten Bildsensor (122b) aufgenommener Bilddaten des Raumbereichs (14) jeweils mittels stereoskopischer Entfernungsschätzung zu erzeugen.

2. Sensor (10) nach Anspruch 1,
wobei die physikalische Eigenschaft eine Frequenz des Lichts (12a-b) umfasst und mittels des ersten Strahlteilerelements (18) Licht (12a) eines ersten Frequenzbandes in den ersten Lichtpfad (20a) und Licht (12b) eines zweiten Frequenzbandes in den zweiten Lichtpfad (20b) ablenkbar ist oder Licht (12a) eines ersten Frequenzbandes, insbesondere eines infraroten Frequenzbandes, in den ersten Lichtpfad (20a) und Licht (12b) außerhalb des ersten Frequenzbandes, insbesondere Umgebungslicht, in den zweiten Lichtpfad (20b) ablenkbar ist oder umgekehrt.

3. Sensor nach Anspruch 1 oder 2,
wobei eine Beleuchtungseinheit (34) vorgesehen ist, welche dafür ausgebildet ist, den Raumbereich (14) mit Licht (12a) eines ersten Frequenzbereichs auszuleuchten, insbesondere mit einem strukturierten Beleuchtungsmuster.

4. Sensor nach Anspruch 3,
wobei die Beleuchtungseinheit (34) dafür ausgebildet ist, nur selektiv Teilbereiche des Raumbereichs (14) auszuleuchten, insbesondere Randbereiche von Schutzbereichen (42), und/oder wobei die 3D-Auswertungseinheit (24) die Erzeugung der ersten Entfernungsinformationen innerhalb der Teilbereiche und die Erzeugung der zweiten Entfernungsinformationen in dem Raumbereich (14) außerhalb der Teilbereiche mit geringerer Genauigkeit vornimmt oder umgekehrt.

5. Sensor (10) nach einem der vorhergehenden Ansprüche,
wobei die physikalische Eigenschaft eine Polarisationsrichtung oder eine Intensität des Lichts (12a-b) umfasst, und wobei insbesondere das erste Strahlteilerelement (18) dafür ausgebildet ist, in den ersten Lichtpfad (20a) Licht (12a) einer um einen Faktor 5, 10, 100 oder 1000 geringeren Intensität abzulenken als in den zweiten Lichtpfad (20b) oder umgekehrt.

6. Sensor (10) nach einem der vorhergehenden Ansprüche,
wobei dem ersten Strahlteilerelement (18) ein gemeinsames Objektiv (16) für den ersten Bildsensor (22a) und den zweiten Bildsensor (22b) vorgeordnet ist.

7. Sensor (10) nach einem der vorhergehenden Ansprüche,
wobei erster Bildsensor (22a) und zweiter Bildsensor (22b) dafür ausgebildet sind, Bilder des Raumbereichs (14) um einen Bruchteil einer Pixelbreite, insbesondere eine halbe Pixelbreite, versetzt zueinander aufzunehmen.

8. Sensor (10) nach einem der vorhergehenden Ansprüche,
wobei das erste Strahlteilerelement (18) als beschichtetes Prisma oder als beschichteter Spiegel ausgebildet ist.

9. Sensor (10) nach einem der vorhergehenden Ansprüche,
der als Sicherheitskamera ausgebildet ist, wobei eine Objektauswertungseinheit (26) für die Erkennung und Überwachung von Objekten innerhalb des Raumbereichs (14) ausgebildet ist, und wobei ein Abschaltsignal ausgebbar ist, wenn ein unzulässiger Objekteingriff in einen Schutzbereich (42) innerhalb des Raumbereichs (14) erfolgt.

10. Sensor (10) nach einem der vorhergehenden Ansprüche,
wobei die 3D-Auswertungseinheit (24) dafür ausgebildet ist, aus den Bilddaten des ersten Bildsensors (22a) und des zweiten Bildsensors (22b) Informationen über die Umgebungsbedingungen zu gewinnen, insbesondere Fremdlichtpegel oder ortsauflösende Glanz- oder Remissionseigenschaften in dem Raumbereich (14), und diese Umgebungsbedingungen zu verwenden, um die Genauigkeit der ersten Entfernungsinformationen und der zweiten Entfernungsinformationen zu verbessern oder zu bewerten.

11. Verfahren zur Überwachung eines Raumbereichs (14), wobei einfallendes Licht (12a-b) mittels eines ersten Strahlteilerelements (18) selektiv unter Vorgabe einer physikalischen Eigenschaft des Lichts (12a-b) auf einen ersten Bildsensor (22a) in einem ersten Lichtpfad (20a) oder einen zweiten Bildsensor (22b) in einem zweiten Lichtpfad (20b) abgelenkt wird,
und wobei mit Hilfe von dem ersten Bildsensor (22a) aufgenommener Bilddaten des Raumbereichs (14) erste Entfernungsinformationen und mit Hilfe von dem zweiten Bildsensor (22b) aufgenommener Bilddaten des Raumbereichs (14) zweite Entfernungsinformationen gewonnen werden und eine dreidimensionale Tiefenkarte aus den ersten Entfernungsinformationen und den zweiten Entfernungsinformationen zusammengeführt wird,
**dadurch gekennzeichnet,**
**dass** erstes Strahlteilerelement (18), erster Bildsensor (22a) und zweiter Bildsensor (22b) einen ersten Stereoskopiezweig bilden und in einem zweiten Stereoskopiezweig einfallendes Licht (112a-b) mittels eines zweiten Strahlteilerelements (118) selektiv unter Vorgabe einer physikalischen Eigenschaft des Lichts (112a-b) auf einen dritten Bildsensor (122a) in einem dritten Lichtpfad (120a) oder einen vierten Bildsensor (122b) in einem vierten Lichtpfad (120b) abgelenkt wird, und dass die ersten Entfernungsinformationen und die zweiten Entfernungsinformationen in einem Stereoskopieverfahren aus Bilddaten des ersten Bildsensors (22a) und des dritten Bildsensors (122a) beziehungsweise des zweiten Bildsensors (22b) und des vierten Bildsensors (122b) gewonnen werden.

12. Verfahren nach Anspruch 11,
wobei der Raumbereich (14) mit einer Beleuchtungsquelle (34) aktiv ausgeleuchtet wird, insbesondere mit einem strukturierten Beleuchtungsmuster, und wobei die physikalische Eigenschaft des Lichts (12a-b, 112a-b) Zugehörigkeit zu dem Frequenzband der Beleuchtungsquelle (34) umfasst, so dass die ersten Entfernungsinformationen mittels aktiver Stereoskopie aus Nutzlicht innerhalb des Frequenzbands und die zweiten Entfernungsinformationen mittels passiver Stereoskopie aus Umgebungslicht außerhalb des Frequenzbands gewonnen werden.

13. Verfahren nach Anspruch 11 oder 12,
wobei Objekte innerhalb des Raumbereichs (14) erkannt und überwacht werden und ein Abschaltsignal zur Absicherung einer überwachten Gefahrenquelle (40) ausgegeben wird, wenn ein unzulässiger Objekteingriff in einen Schutzbereich (42) innerhalb des Raumbereichs (14) erfolgt.

## Claims

1. An optoelectronic sensor (10) for monitoring a spatial zone (14),
wherein the sensor (10) has a first light path (20a) in which a first image sensor (22a) is provided and a second light path (20b) in which a second image sensor (22b) is provided, as well as a first beam splitter element (18) by means of which incident light (12a-b) is selectably deflectable into the first light path (20a) or into the second light path (20b) in accordance with a physical property of the light (12a-b),
wherein a 3D evaluation unit (24) is provided which is designed for the generation of first distance information of image data of the spatial zone (14) taken with the aid of the first image sensor (22a) and of second distance information of image data of the spatial zone (14) taken with the aid of the second image sensor (22b), as well as for the combination of the first distance information and of the second distance information to form a three-dimensional depth map of the spatial zone (14),
**characterized in that**
the sensor is designed as a stereoscopic camera (10), with the first beam splitter element (18), the first image sensor (22a) and the second image sensor (22b) forming a first stereoscopic branch and the camera (10) having a second stereoscopic branch with a third light path (120a) in which a third image sensor (122a) is provided, with a fourth light path (120b) in which a fourth image sensor (122b) is provided, as well as with a second beam splitter element (188) by means of which incident light (122a-b) is deflectable selectively into the third light path (120a) or into the fourth light path (120b); in accordance with a physical property of the light (112a-b) and **in that** the 3D evaluation unit (24) is designed to generate, in each case by means of stereoscopic distance estimation, the first distance information of image data of the spatial zone (14) taken with the aid of the first image sensor (22a) and of the third image sensor (122a) and the second distance information of image data of the spatial zone (14) taken with the aid of the second image sensor (22b) and of the fourth image sensor (122b).

2. A sensor (10) in accordance with claim 1,
wherein the physical property includes a frequency of the light (12a-b) and, by means of the first beam splitter element (18), light (12a) of a first frequency band can be deflected into the first light path (20a) and light (12b) of a second frequency band can be deflected into the second light path (20b) or light (12a) of a first frequency band, in particular of an infrared frequency band, is deflectable into the first light path (20a) and light (12b) outside the first frequency band, in particular environmental light, is deflectable into the second light path (20b), or vice versa.

3. A sensor in accordance with claim 1 or claim 2,
wherein an illumination unit (34) is provided which is designed to illuminate the spatial zone (14) with light (12a) of a first frequency range, in particular with a structured illumination pattern.

4. A sensor in accordance with claim 3,
wherein the illumination unit (34) is designed only selectively to illuminate part regions of the spatial zone (14), in particular marginal zones of protected zones (42); and/or wherein the 3D evaluation unit (24) carries out the generation of the first distance information within the part regions and the generation of the second distance information in the spatial zone (14) outside the part regions with smaller precision, or vice versa.

5. A sensor (10) in accordance with any one of the preceding claims, wherein the physical property includes a polarization direction or an intensity of the light (12a-b); and wherein in particular the first beam splitter element (18) is designed to deflect light (12a) of an intensity smaller by a factor of 5, 10, 100 or 1000 into the first light path (20a) rather than into the second light path (20b) or vice versa.

6. A sensor (10) in accordance with any one of the preceding claims, wherein a common objective (16) for the first image sensor (22a) and for the second image sensor (22b) is arranged before the beam splitter element (18).

7. A sensor (10) in accordance with any one of the preceding claims, wherein the first (image sensor (22a) and the second image sensor (22b) are designed to take images of the spatial zone (14) offset to one another by a fraction of a pixel width, in particular half a pixel width.

8. A sensor (10) in accordance with any one of the preceding claims, wherein the first beam splitter element (18) is designed as a coated prism or as a coated mirror.

9. A sensor (10) in accordance with any one of the preceding claims, which is designed as a safety camera, wherein an object evaluation unit (26) is designed for the recognition and monitoring of objects within the spatial zone (14); and wherein a switch-off signal can be output when an unpermitted object intrusion takes place into a protected zone (42) within the spatial zone (14).

10. A sensor (10) in accordance with any one of the preceding claims, wherein the 3D evaluation unit (24) is designed to acquire information on the environmental conditions from the image data of the first image sensor (22a) and of the second image sensor (22b), in particular external light limits or spatially resolving gloss or remission properties in the spatial zone (14) and to use these environmental conditions to improve or to evaluate the precision of the first distance information and of the second distance information.

11. A method of monitoring a spatial zone (14), wherein, by means of a first beam splitter element (18), incident light (12a-b) is deflected selectively onto a first image sensor (22a) in a first light path (20a) or onto a second image sensor (22b) in a second light path (20b) in accordance with a physical property of the light (12a-b);
and wherein first distance information is acquired with the aid of image data of the spatial zone (14) taken by the first image sensor (22a) and second information data is acquired with the aid of image data of the spatial region (14) taken by the second image sensor (22b) and a three-dimensional depth card is combined from the first distance information and from the second distance information,
**characterized in that**
the first beam splitter element (18), the first image sensor (22a) and the second image sensor (22b) form a first stereoscopic branch and light (112a-b) incident in a second stereoscopic branch is selectively deflected by means of a second beam splitter element (118) onto a third image sensor (122a) in a third path (120a) o onto a fourth image sensor (122b) in a fourth light path (120b) in accordance with a physical property of the light (112a-b); and **in that** the first distance information and the second distance information are acquired in a stereoscopic process from image date of the first image sensor (22a) and of the third image sensor (122a) or of the second image sensor (22b) and of the fourth image sensor (122b) respectively.

12. A method in accordance with claim 11,
wherein the spatial zone (14) is actively illuminated by an illumination source (34), in particular by a structured illumination pattern; and wherein the physical property of the light (12a-b, 112a-b) includes belonging to the frequency band of the illumination source (34) so that the first distance information is acquired by means of active stereoscopy from useful light within the frequency band and the second distance information is acquired by means of passive stereoscopy from environmental light outside the frequency band.

13. A method in accordance with claim 11 or claim 12,
wherein objects within the spatial zone (14) are recognized and monitored and a switch-off signal is output for securing a monitored danger source (40) when an unpermitted object intrusion into a protected zone (42) takes place within the spatial zone (14).

## Revendications

1. Capteur optoélectronique (10) pour la surveillance d'une zone d'espace (14), ledit capteur (10) comprenant un premier trajet de lumière (20a) dans lequel est prévu un premier capteur d'images (22a), et un second trajet de lumière (20b) dans lequel est prévu un second capteur d'images (22b), ainsi qu'un premier élément diviseur de rayonnement (18) au moyen duquel la lumière incidente (12a-b) peut être défléchie sélectivement selon une propriété physique de la lumière (12a-b) dans le premier trajet de lumière (20a) ou le second trajet de lumière (20b),
dans lequel il est prévu une unité d'évaluation tridimensionnelle (24) qui est réalisée pour générer des premières informations de distance à l'aide des données images, prises par le premier capteur d'images (22a), de la zone d'espace (14), et des secondes informations de distance à l'aide des données images, prises par le second capteur d'images (22b), de la zone d'espace (14), ainsi que pour rassembler les premières informations de distance et les secondes informations de distance pour donner une carte de profondeur tridimensionnelle de la zone d'espace (14),
**caractérisé en ce que**
le capteur est réalisé sous forme de caméra stéréoscopique (10), dans laquelle le premier élément diviseur de rayonnement (18), le premier capteur d'images (22a) et le second capteur d'images (22b) forment une première branche de stéréoscopie et la caméra (10) comprend une seconde branche de stéréoscopie avec un troisième trajet de lumière (120a) dans lequel est prévu un troisième capteur d'images (122a), avec un quatrième trajet de lumière (120b) dans lequel est prévu un quatrième capteur d'images (122b), et avec un second élément diviseur de rayonnement (188) au moyen duquel la lumière incidente (112a-b) peut être défléchie sélectivement selon une propriété physique de la lumière (112a-b) dans le troisième trajet de lumière (120a) ou le quatrième trajet de lumière (120b), et **en ce que** l'unité d'évaluation tridimensionnelle (24) est réalisée pour générer les premières informations de distance à l'aide des données images, prises par le premier capteur d'images (22a) et le troisième capteur d'images (122a), de la zone d'espace (14) et les secondes informations de distance à l'aide des données images, prises par le second capteur d'images (22b) et le quatrième capteur d'images (122b), de la zone d'espace (14), respectivement au moyen d'une estimation de distance stéréoscopique.

2. Capteur (10) selon la revendication 1,
dans lequel la propriété physique inclut une fréquence de la lumière (12a-b) et, au moyen du premier élément diviseur de rayonnement (18), la lumière (12a) d'une première bande de fréquences peut être défléchie vers le premier trajet de lumière (20a) et la lumière (12b) d'une seconde bande de fréquences peut être défléchie vers le second trajet de lumière (20b), ou bien la lumière (12a) d'une première bande de fréquences, en particulier d'une bande de fréquences infrarouge, peut être défléchie vers le premier trajet de lumière (20a) et la lumière (12b) à l'extérieur de la première bande de fréquences, en particulier la lumière environnante, peut être défléchie vers le second trajet de lumière (20b) ou inversement.

3. Capteur selon la revendication 1 ou 2,
dans lequel il est prévu une unité d'éclairage (34), laquelle est réalisée pour éclairer la zone d'espace (14) avec de la lumière (12a) d'une première plage de fréquences, en particulier avec un motif d'éclairage structuré.

4. Capteur selon la revendication 3,
dans lequel l'unité d'éclairage (34) est réalisé pour éclairer uniquement de manière sélective des zones partielles de la zone d'espace (14), en particulier des zones de bordure de zones de protection (42), et/ou dans lequel l'unité d'évaluation tridimensionnelle (24) procède à la génération des premières informations de distance à l'intérieur des zones partielles et à la génération des secondes informations de distance dans la zone d'espace (14) à l'extérieur des zones partielles avec une plus faible précision, ou inversement.

5. Capteur (10) selon l'une des revendications précédentes,
dans lequel la propriété physique comprend une direction de polarisation ou une intensité de la lumière (12a-b), et dans lequel le premier élément diviseur de rayonnement (18) est en particulier réalisé pour défléchir la lumière (12a) dans le premier trajet de lumière (20a) présentant une intensité plus faible d'un facteur 5, 10, 100 ou 1000, que dans le second trajet de lumière (20b) ou inversement.

6. Capteur (10) selon l'une des revendications précédentes,
dans lequel un objectif commun (16) pour le premier capteur d'images (22a) et pour le second capteur d'images (22b) est agencé avant l'élément diviseur de rayonnement (18).

7. Capteur (10) selon l'une des revendications précédentes,
dans lequel le premier capteur d'images (22a) et le second capteur d'images (22b) sont réalisés pour prendre des images de la zone d'espace (14) qui sont décalées les unes par rapport aux autres d'une fraction de la largeur d'un pixel, en particulier de la moitié de la largeur d'un pixel.

8. Capteur (10) selon l'une des revendications précédentes,
dans lequel le premier élément diviseur de rayonnement (18) est réalisé sous forme de prisme doté d'un revêtement ou sous forme de miroir doté d'un revêtement.

9. Capteur (10) selon l'une des revendications précédentes,
lequel est réalisé en tant que caméra de sécurité, dans lequel une unité d'évaluation d'objet (26) est réalisée en vue de la reconnaissance et de la surveillance d'objets à l'intérieur de la zone d'espace (14), et au moyen duquel un signal d'arrêt peut être délivré quand une intervention inadmissible d'un objet a lieu dans une zone protégée (42) à l'intérieur de la zone d'espace (14).

10. Capteur (10) selon l'une des revendications précédentes,
dans lequel l'unité d'évaluation tridimensionnelle (24) est réalisée pour obtenir, à partir des données images du premier capteur d'images (22a) et du second capteur d'images (22b), des informations sur les conditions environnantes, en particulier le niveau de lumière extérieure ou les propriétés de luisance ou de rémission avec résolution locale dans la zone d'espace (14), et pour utiliser ces conditions environnantes afin d'améliorer ou d'évaluer la précision des premières informations de distance et des secondes informations de distance.

11. Procédé pour la surveillance d'une zone d'espace (14), dans lequel la lumière incidente (12a-b) est défléchie de manière sélective au moyen d'un élément diviseur de rayonnement (18) selon une propriété physique de la lumière (12a-b) vers un premier capteur d'images (22a) dans un premier trajet de lumière (20a) ou vers un second capteur d'images (22b) dans un second trajet de lumière (20b),
et dans lequel, à l'aide des données images, prises par le premier capteur d'images (22a), de la zone d'espace (14) on obtient des premières informations de distance, et à l'aide des données images, prises par le second capteur d'images (22b), de la zone d'espace (14) on obtient des secondes informations de distance et on procède au regroupement d'une carte de profondeur tridimensionnelle à partir des premières informations de distance et des secondes informations de distance,
**caractérisé en ce que**
le premier élément diviseur de rayonnement (18), le premier capteur d'images (22a) et le second capteur d'images (22b) forment une première branche de stéréoscopie et la lumière incidente (112a-b) dans une seconde branche de stéréoscopie est défléchie au moyen d'un second élément diviseur de rayonnement (118) de manière sélective selon une propriété physique de la lumière (112a-b) vers un troisième capteur d'images (122a) dans un troisième trajet de lumière (120a) ou vers un quatrième capteur d'images (122b) dans un quatrième trajet de lumière (120b), et **en ce que** les premières informations de distance et des secondes informations de distance sont obtenues, dans un procédé par stéréoscopie, à partir des données images du premier capteur d'images (22a) et du troisième capteur d'images (122a), ou respectivement du second capteur d'images (22b) et du quatrième capteur d'images (122b).

12. Procédé selon la revendication 11,
dans lequel la zone d'espace (14) est éclairée de manière active avec une source d'éclairage (34), en particulier avec un motif d'éclairage structuré, et dans lequel la propriété physique de la lumière (12a-b, 112a-b) inclut l'appartenance à la bande de fréquences de la source d'éclairage (34), de sorte que les premières informations de distance sont obtenues, au moyen d'une stéréoscopie active, à partir de la lumière utile à l'intérieur de la bande de fréquences, et les secondes informations de distance sont obtenues, au moyen d'une stéréoscopie passive, à partir de la lumière environnante à l'extérieur de la bande de fréquences.

13. Procédé selon la revendication 11 ou 12,
dans lequel des objets à l'intérieur de la zone d'espace (14) sont reconnus et surveillés, et un signal d'arrêt est délivré pour sécuriser une source de danger surveillée (40) quand une intervention inadmissible d'un objet a lieu dans une zone protégée (42) à l'intérieur de la zone d'espace (14).
